# EUROPÄISCHE PATENTSCHRIFT

(11) **EP 1 334 989 B1**
(45) Veröffentlichungstag und Bekanntmachung des Hinweises auf die Patenterteilung: **27.09.2006**
(21) Anmeldenummer: 03001241.3
(22) Anmeldetag: 21.01.2003
(51) Int. Cl.: C08G 63/00, C08G 63/20, C09D 167/00

(54) **Hydroxyfunktionelle Polyester**
Hydroxy-functionalized polyesters
Polyesters hydroxy-fonctionnalises

(30) Priorität: 29.01.2002 AT 200200141
(43) Veröffentlichungstag der Anmeldung: 13.08.2003
(73) Patentinhaber: Cytec Surface Specialties Austria GmbH, 8402 Werndorf (AT)
(72) Erfinder: Friedl, Maximilian, Dr., 8101 Gratkorn (AT); Urbano, Edmund, Dr., 8044 Graz (AT); Evrard, Didier, 21000 Dijon (FR); Chevillotte, Jean-Pierre, 21700 Magny (FR)
(74) Vertreter: Deckers, Hellmuth Alexander

(56) Entgegenhaltungen:
- EP-A- 0 150 476
- EP-A- 0 234 641
- WO-A-99/29760
- US-A- 3 714 091
- US-A- 4 049 599

## Beschreibung

Die Erfindung betrifft hydroxyfunktionelle Polyester, ein Verfahren zu ihrer Herstellung und ihre Anwendung als Bindemittel in festkörperreichen Lösungsmittel-haltigen Lacken.

Polyester werden vor allem als Bindemittel in Füllern, in Industrielacken und Malerlacken eingesetzt. Diese Bindemittel haben ein hohes Pigmentaufnahmevermögen. Die damit hergestellten Beschichtungen zeichnen sich durch guten Glanz und gute chemische Stabilität aus.

Aus Umweltgründen ist man bestrebt, bei konventionellen (Lösungsmittel-haltigen) Lacken den Festkörpergehalt zu erhöhen, um die Menge an Lösungsmitteln, die bei der Trocknung freiwerden, zu minimieren. Andererseits steigt bei zunehmendem Festkörpergehalt die Viskosität des Lacks, damit wird die Verarbeitbarkeit schlechter.

Es wurde daher vielfach nach Wegen gesucht, die Viskosität trotz Erhöhung des Festkörpergehalts nur möglichst wenig heraufzusetzen.

Eine Möglichkeit zur Erhöhung des Festkörpergehalts in Alkydharzlacken ist in der AT-B 396 476 beschrieben: hier werden Alkydharze nach dem ersten Polykondensationsschritt mit Reaktionsprodukten aus hydroxyfunktionellen Allyläthern und Polycarbonsäuren unter Veresterungsbedingungen modifiziert. Die genannten Umsetzungsprodukte müssen mindestens 3 Allyläthergruppen im Molekül aufweisen.

Die Herstellung und Handhabung der Allyläther ist jedoch aufwendig und bedingt einen zusätzlichen Schritt in der Produktion. Es war daher die Aufgabe der vorliegenden Erfindung, Polyesterharze zur Verfügung zu stellen, die einfach herzustellen sind und ebenfalls zu Lacken mit hohem Festkörpergehalt und guten Applikationseigenschaften führen.

Die Aufgabe wird gelöst durch Bereitstellung von mehrfach verzweigten Polyestern. Mit derartigen Polyestern ist es möglich, Lacke mit erhöhtem Festkörpergehalt bei üblicher Applikationsviskosität zu formulieren.

Gegenstand der Erfindung sind daher hydroxyfunktionelle Polyester mit einer Hydroxylzahl von 90 mg/g bis 300 mg/g, bevorzugt 90 mg/g bis 250 mg/g, insbesondere 90 mg/g bis 180 mg/g, enthaltend Bausteine abgeleitet von di- oder mehrfunktionellen Säuren **A**, insbesondere Carbonsäuren, aliphatischen tri- oder mehrfunktionellen Alkoholen **B** und aliphatischen Monocarbonsäuren **C** mit mindestens 6 Kohlenstoffatomen, wobei die Komponente **A** mindestens eine tri- oder mehrfunktionelle Säure oder deren Anhydrid enthält.

Ein weiterer Gegenstand der Erfindung ist ein Verfahren zur Herstellung dieser Polyester, wobei im ersten Schritt die Alkohole **B** mit den Monocarbonsäuren **C** in einem Verhältnis umgesetzt werden, daß das Kondensationsprodukt **BC** im Mittel 1,5 bis 3,5 Hydroxylgruppen je Molekül aufweist. Bevorzugt ist die mittlere Anzahl von Hydroxylgruppen in den Molekülen **BC** zwischen 1,7 und 3,1, besonders bevorzugt zwischen 1,9 und 2,7. Im zweiten Schritt werden diese verzweigten Hydroxylgruppen-haltigen Kondensationsprodukte mit di- oder mehrfunktionellen Säuren **A** umgesetzt, wobei die Mengen der Säuren **A** und der Kondensationsprodukte **BC** bevorzugt so gewählt werden, daß mindestens 90 % der Säuregruppen von **A** bei der Polykondensation verbraucht werden.

Ein weiterer Gegenstand der Erfindung ist die Formulierung von festkörperreichen Lacken, die die erfindungsgemäßen Polyester und geeignete Vernetzungsmittel enthalten. Die Vernetzung erfolgt dabei über die Hydroxylgruppen des Polyesters. Als Vernetzungsmittel geeignet sind daher alle Verbindungen, die bei erhöhter Temperatur mit hydroxyfunktionellen Verbindungen reagieren, unter Bildung eines Addukts oder Kondensats. Solche Vernetzungsmittel sind insbesondere Aminoplastharze wie die bekannten Melamin-Formaldehyd-Harze, sowie verkappte Isocyanate.

Die Säuren **A** weisen mindestens zwei, bevorzugt drei oder mehr, Säuregruppen im Molekül auf. Es ist erfindungsgemäß auch möglich, Mischungen von zwei oder mehreren dieser Säuren einzusetzen, wobei die mittlere Säurefunktionalität (Anzahl der Carboxylgruppen je Molekül) mindestens 2,1 betragen soll. Mindestens eine der eingesetzten Säuren **A** hat eine Funktionalität von drei oder mehr. Das bedeutet, daß bei Verwendung einer einzigen Säure gemäß **A** deren Funktionalität mindestens drei beträgt, werden Mischungen eingesetzt, so ist mindestens eine Säure in der Mischung enthalten, deren Funktionalität mindestens drei beträgt. Bevorzugt sind die Säuregruppen Carbonsäuregruppen (Carboxylgruppen), es ist jedoch auch möglich, Säuren einzusetzen, die zusätzlich zu Carbonsäuregruppen auch andere Säuregruppen wie Sulfon- oder Phosphonsäuregruppen aufweisen, wie Sulfoisophthalsäure. Diese Säuregruppen zählen bei der Bestimmung der Funktionalität selbstverständlich mit. Die Säuren **A** können aliphatische lineare, verzweigte oder cyclische Säuren oder bevorzugt aromatische Säuren sein. Geeignet sind beispielsweise Citronensäure, Tricarballylsäure, 1,3,5-Cyclohexantricarbonsäure, Trimellithsäure, Trimesinsäure, Benzophenontetracarbonsäure und Pyromellithsäure sowie Sulfoisophthalsäure, Sulfophthalsäure, Phosphonopropionsäure und Phosphonoessigsäure. Anstelle der Säuren oder in Mischung mit diesen lassen sich auch deren Anhydride einsetzen.

Werden Mischungen mit difunktionellen Säuren eingesetzt, so werden als letztere besonders Adipinsäure, Bernsteinsäure, Phthalsäure, Isophthalsäure, Terephthalsäure und 2,6-Naphthalindicarbonsäure bevorzugt.

Die Alkohole **B** sind lineare, verzweigte oder cyclische aliphatische Alkohole mit 2 bis 40, bevorzugt 3 bis 36, und insbesondere bis 20 Kohlenstoffatomen und sind mindestens trifunktionell. Geeignet sind Glycerin, Trimethyloläthan, Trimethylolpropan; unter den höheren Alkoholen insbesondere Erythrit, Sorbit, Mannit, Diglycerin, Ditrimethylolpropan, Pentaerythrit und Dipentaerythrit. Bevorzugt sind Triole sowie Mischungen von Polyolen mit einer mittleren Funktionalität bis 4,5, bevorzugt bis 4, und insbesondere bis 3,7. Dabei können in solchen Mischungen die Diole Glykol, 1,2- und 1,3-Propandiol, 1,4-Butandiol, Neopentylglykol, 1,6-Hexandiol, 3,3,5- und 3,5,5-Trimethylhexandiol-1,6 sowie die Polyoxyalkylendiole HO-[(CH₂)ₙ-O-]ₘ-H mit n= 2 bis 4 und m = 2 bis 100, insbesondere m = 3 bis 40, wobei die Oxyalkylengruppen auch in Mischung (statistisch oder in Blöcken) vorliegen können, eingesetzt werden.

Besonders bevorzugt werden Glycerin, Trimethyloläthan und Trimethylolpropan einzeln oder in Mischung eingesetzt.

Die Monocarbonsäuren **C** sind aliphatische gesättigte lineare oder verzweigte Carbonsäuren mit 5 bis 40 Kohlenstoffatomen, bevorzugt 6 bis 30 Kohlenstoffatomen, und insbesondere 7 bis 20 Kohlenstoffatomen. Unter diesen sind verzweigte Monocarbonsäuren bevorzugt, insbesondere solche, in denen sich die Verzweigungsstelle in der Nähe der Carboxylgruppe befindet, also in α-, β-, γ- oder δ- Stellung, besonders bevorzugt in α- oder β-Stellung, einfach oder mehrfach verzweigte gesättigte aliphatische Carbonsäuren. Geeignet sind beispielsweise die Isononansäure, die 2-Äthylhexansäure, die α,α- Dimethyloctansäure, und die α,α-Dimethylpropansäure sowie deren Mischungen. Die in α-Stellung verzweigten Monocarbonsäuren sind im Handel als ® Versatic-Säuren oder Koch-Säuren erhältlich. Es können jedoch auch ungesättigte aliphatische Monocarbonsäuren oder deren aus natürlichen Quellen gewonnene Gemische mit gesättigten Fettsäuren wie Kokosfettsäure, Palmkernölfettsäure und teilhydrierte Fettsäuregemische eingesetzt werden. In diesem Fall ist es bevorzugt, daß die ungesättigten Fettsäuren höchstens 25 %, bevorzugt höchsten 20 %, und insbesondere höchstens 17 % der Masse der in der Mischung enthaltenen Fettsäuren ausmachen.

Die Polyester werden bevorzugt in einem zweistufigen Verfahren hergestellt, wobei im ersten Schritt die Alkohole **B** mit den Monocarbonsäuren **C** umgesetzt werden. Dabei werden die Mengen der Alkohole **B** und der Monocarbonsäuren **C** so gewählt, daß das Kondensationsprodukt **BC** im Mittel 1,5 bis 3,5 Hydroxylgruppen je Molekül aufweist. Die beiden Edukte werden gemischt und gemeinsam auf eine Temperatur von 140 bis 250 °C erhitzt; bevorzugt wird die Veresterung ohne Zusatz eines Katalysators durchgeführt. Es ist jedoch möglich, die bekannten Katalysatoren, insbesondere Verbindungen des Mangans, Zinns, Titans, Bleis, Antimons, Wismuts und Germaniums, zur Beschleunigung der Reaktion zuzusetzen. Das bei der Veresterung entstehende Wasser wird vorteilhaft durch azeotrope Destillation entfernt, wobei als Lösungs- und Schleppmittel bevorzugt Xylol eingesetzt wird. Die Reaktion wird über die Abnahme der Säurezahl des Gemischs verfolgt, bei Erreichen einer Säurezahl von weniger als 2 mg/g wird die Reaktion beendet und die Mischung wird abgekühlt. Dabei ist bevorzugt, daß die mittlere Anzahl von Hydroxylgruppen in den Molekülen **BC** zwischen 1,7 und 3,1 liegt.

Im zweiten Schritt werden diese verzweigten Hydroxylgruppen-haltigen Kondensationsprodukte **BC** mit den di- oder mehrfunktionellen Säuren **A** umgesetzt, bevorzugt in einem Temperaturbereich von 120 bis 220 °C. Vorzugsweise werden die Mengen der Säuren **A** und der Kondensationsprodukte **BC** im zweiten Schritt so gewählt, daß mindestens 90 % der Säuregruppen von **A** bei der Polykondensation verbraucht werden. Das Reaktionswasser kann wiederum durch azeotrope Destillation entfernt werden; die Reaktion wird wieder bis zum Erreichen einer Säurezahl von unter 2 mg/g geführt.

Der Staudinger-Index *J*₀ des Reaktionsproduktes, gemessen in Chloroform, beträgt im allgemeinen 3 bis 12 cm³/g, bevorzugt 3,5 bis 10, und insbesondere 4 bis 8 cm³/g. Der erhaltene Polyester wird auf unter 150 °C abgekühlt und in organischen Lösungsmitteln aufgenommen und auf eine ca. 80 %ige Lösung verdünnt. Die Viskosität des Polyesters in Xylol (80 %ige Lösung, gemessen bei 23 °C und 25 s⁻¹) nach DIN EN ISO 3219 beträgt 1000 bis 3000 mPa·s, insbesondere 1100 bis 2900 mPa·s.

Die Säurezahl ist gemäß DIN 53 402 (DIN EN ISO 3682) definiert als der Quotient derjenigen Masse ***m*** _{KOH} an Kaliumhydroxid, die erforderlich ist, um eine zu untersuchende Probe zu neutralisieren, und der Masse ***m*** _{B} dieser Probe (Masse des Feststoffes in der Probe bei Lösungen oder Dispersionen); ihre übliche Einheit ist "mg/g".

Die früher so bezeichnete "Grenzviskositätszahl", nach DIN 1342, Teil 2.4, "Staudinger-Index" ***J***_{*g*} genannt, ist der Grenzwert der Staudinger-Funktion ***J***ᵥ bei abnehmender Konzentration und Schubspannung, wobei ***J***ᵥ die auf die Massenkonzentration β_{B} = ***m*** _{B} / ***V*** des gelösten Stoffes **B** (mit der Masse ***m***_{B} des Stoffes im Volumen ***V*** der Lösung) bezogene relative Viskositätsänderung ist, also ***J***ᵥ = (η ᵣ-1)/ β_{B}. Dabei bedeutet ηᵣ - 1 die relative Viskositätsänderung, gemäß ηᵣ - 1 = (η - ηₛ)/η ₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; früher häufig "dl/g".

Die erhaltenen Polyester zeichnen sich dadurch aus, daß sie als 80 %ige Lösungen in gebräuchlichen Lösungsmitteln wie Xylol, Methoxypropylacetat oder Solvent Naphtha (Leichtölfraktion mit einer Siedetemperatur von 150 bis 195 °C) Viskositäten von unter 3000 mPa·s aufweisen, während bekannte Systeme bereits als 70 %ige Lösungen Viskositäten von 2600 bis 5000 mPa·s haben.

Die Polyester lassen sich als Bindemittel in festkörperreichen Industrielacken, insbesondere für Füller bei der Automobillackierung, verwenden. Sie sind ebenfalls besonders geeignet als Bindemittel für Metallic-Basis-Lacke. Sie haben ein gutes Pigmentbenetzungsvermögen und ergeben Beschichtungen mit gutem Glanz. Als Vernetzungsmittel sind insbesondere geeignet Aminoplastharze wie die bekannten teil- oder voll-verätherten Melamin-Formaldehyd-Harze, sowie verkappte aliphatische und aromatische Isocyanate.

Die Erfindung wird durch die nachfolgenden Beispiele erläutert.

### Beispiele:

### Beispiel 1

3 mol Isononansäure und 3 mol Trimethylolpropan wurden unter guter Durchmischung auf 220 °C erhitzt und unter azeotroper Destillation bis zu einer Säurezahl von unter 2 mg/g verestert. Die Reaktionsmasse wurde dann auf 180 °C gekühlt und 1 mol Trimellithsäureanhydrid wurde zugesetzt. Danach wurde die Temperatur wieder auf 220 °C gesteigert, die Veresterung wurde wieder bis zu einem Wert für die Säurezahl der Reaktionsmischung von weniger als 2 mg/g fortgeführt. An einer Probe wurde ein Staudinger-Index von 6,2 cm³/g bestimmt. Das Produkt wurde dann auf 140 °C abgekühlt und in Xylol aufgenommen, es wurde eine Konzentration (Festkörper-Massenanteil) von 80 % eingestellt. Dis Viskosität in Xylol bei der Konzentration von 80 % (80 cg/g) betrug 2840 mPa·s.

### Beispiel 2

3 mol Kokosfettsäure und 3 mol Trimethylolpropan wurden unter guter Durchmischung auf 220 °C erhitzt und unter azeotroper Destillation bis zu einer Säurezahl von unter 2 mg/g verestert. Die Reaktionsmasse wurde dann auf 180 °C gekühlt und 1 mol Trimellithsäureanhydrid wurde zugesetzt. Danach wurde die Temperatur wieder auf 220 °C gesteigert, die Veresterung wurde wieder bis zu einem Wert für die Säurezahl der Reaktionsmischung von weniger als 2 mg/g fortgeführt. An einer Probe wurde ein Staudinger-Index von 5,7 cm³/g bestimmt. Das Produkt wurde dann auf 140 °C abgekühlt und in Xylol aufgenommen, es wurde eine Konzentration (Festkörper-Massenanteil) von 80 % eingestellt. Die Viskosität in Xylol bei der Konzentration von 80 cg/g betrug 1280 mPa·s.

### Beispiel 3 Pigmentanreibung

Es wurden Pigmentanreibungen 3A bis 3D mit einer Pigment-Mischung von Massenanteilen von 42 % Titandioxid (® Kronos 2310), 57 % Bariumsulfat (Blanc Fixe Micro, Fa. Sachtleben), 0,1 % Ruß (® Black Special 4, Degussa) und Siliciumdioxid (Kieselsäure ® Aerosil R 972, Degussa) hergestellt, gemäß der Rezeptur in der Tabelle 1. Die Mischungen wurden in einer Perlmühle während 120 Minuten verrieben.

**Tabelle 1 Pigmentanreibungen**

| Anreibung | 3 A | 3 B | 3 C | 3 D |
|---|---|---|---|---|
| Masse Pigmentmischung in g | 90 | 90 | 90 | 90 |
| Masse Alkydharz* in g | 43,6 | 43,6 | | |
| Masse Polyester aus Beispiel 1 in g | | | 43,6 | 100 |

| | | | | |
|---|---|---|---|---|
| *: handelsübliches Alkydharz (® Vialkyd AN 927, Solutia Germany GmbH & Co. KG, 70 %ig in Xylol) | | | | |

Dabei sind die Massen der Harze hier und im folgenden als Massen der betreffenden Festharze zu verstehen.

### Beispiel 4 Herstellung der Füller-Lacke

Die Pigmentanreibungen aus Beispiel 3 wurden gemäß der Rezeptur in der Tabelle 2 aufgelackt:

**Tabelle 2 Füller-Lack-Rezepturen**

| Lack | 4 A | 4 B | 4 C | 4 D |
|---|---|---|---|---|
| Anreibung gemäß | 3 A _ | 3 B | 3 C | 3 D |
| Masse der Anreibung in g | 133,6 | 133,6 | 133,6 | 190 |
| Masse Alkydharz* in g | 18,7 | | 18,7 | |
| Masse Polyester aus Beispiel 1 in g | | 18,7 | | 0 |
| Masse verkapptes Isocyanat⁺ in g | 28,1 | 28,1 | 28,1 | 28,1 |
| Masse Melaminharz-Lösung# in g | 9,6 | 9,6 | 9,6 | 9,6 |
| Lösungsmittel 1 Zusatz in g/100 g | 5,4 | 5,4 | 2,3 | 2,9 |
| Lösungsmittel 2 Zusatz in g/100 g | 9,1 | 8,8 | 8,8 | 6,3 |
| Festkörper-Massenanteil° in % | 57 | 58 | 60,2 | 61,8 |

| | | | | |
|---|---|---|---|---|
| *: handelsübliches Alkydharz (® Vialkyd AN 903, 70 %ig in Äthoxypropylacetat) +: verkappte Polyisocyanat-Addukt (® Additol XL 433, Solutia Germany GmbH & Co. KG, 60 %ig gelöst in Methoxypropylacetat, Massenanteil an Isocyanatgruppen im Festharz 12 %) #: handelsübliches Melaminharz (® Maprenal MF 980/62 B, Melamin-Benzoguanamin-FormaldehydHarz, mit Methanol und n-Butanol veräthert, in 62 %iger Lösung in n-Butanol, Solutia Germany GmbH & Co. KG) °: bestimmt durch Trocknung einer Probe von 2 bis 3 g bei 105 °C während drei Stunden Lösungsmittel 1: ® Solvesso 100, Aromatenmischung, wird in einer solchen Menge zugesetzt, daß die Auslaufzeit des Lacks mit diesem Zusatz aus einem AFNOR Becher Nr. 4 70 Sekunden beträgt; der angegebene Wert ist das Verhältnis der Masse des zugesetzten Lösungsmittels zur Masse des damit gemischten Lacks, in %. Lösungsmittel 2: Mischung aus 40 Massenteilen Xylol und 60 Massenteilen Butylacetat, wird in einer solchen Menge zugesetzt, daß die Auslaufzeit des Lacks mit dem Zusatz des Lösungsmittels 1 und mit diesem Zusatz aus einem AFNOR Becher Nr. 4 28 Sekunden beträgt; der angegebene Wert ist das Verhältnis der Masse des zugesetzten Lösungsmittels zur Masse des damit gemischten Lacks, in %. | | | | |

Gegenüber dem Vergleichslack 4A wird der Festkörper-Massenanteil durch Zusatz oder Alleinverwendung des erfindungsgemäßen Bindemittels deutlich erhöht. Dies kommt besonders deutlich zum Tragen, wenn das Verhältnis der Masse an flüchtigen Stoffen zur Masse des Feststoffs betrachtet wird. Dies Verhältnis ist letztlich maßgebend für die Belastung der Atmosphäre mit flüchtigen Stoffen bei gleicher Beschichtungsdicke. Dies Verhältnis beträgt bei den obigen Beispielen

**Tabelle 2a**

| Lack | 4A | 4B | 4C | 4D |
|---|---|---|---|---|
| Verhältnis der Massen von flüchtigen | 43/57 = | 42/58 = | 39,8/60,2 | 38,2/61,8 = |
| Stoffen und Festkörper | 75,4 % | 72,4 % | = 66,1 % | 61,8 % |

### Beispiel 5 Applikation als Füller-Lacke

Mit einer pneumatischen Sprühpistole wurden Bleche lackiert, die vorher durch Elektrotauchlackierung vorbeschichtet worden waren und darüber eine Füllerschicht aus den Lacken 4A bis 4D erhielten. Die Trockenfilmstärke des Füllers (nach Trocknung bei 140 °C während 20 Minuten) betrug 40 ± 5 µm. Die Prüfergebnisse sind in der Tabelle 3 zusammengefaßt.

Über der Füllerschicht wurde in einem weiteren Lackiergang eine Metallic-Basis-Lackierung sowie eine Klarlackschicht appliziert gemäß den Angaben in Tabelle 4 und 5. Basislack und Klarlack wurden anschließend bei 140 °C während 20 Minuten eingebrannt. Die Prüfergebnisse an diesen Lackaufbauten sind in den Tabellen 4 und 5 zusammengefaßt.

### 6 Ergebnisse der Prüfung der Beschichtungen

### 6.1 Beschichtung nur bis zum Füller (ohne Basis- und Klarlack)

**Tabelle 3 Prüfergebnisse**

| Füllerlack | 4A | 4B | 4C | 4D |
|---|---|---|---|---|
| Schichtdicke in µm | 40 | 40 | 40 | 40 |
| Härte (Persoz) in s | 255 | 270 | 240 | 250 |
| Beständigkeit gegen Xylol in min | 1 | 2 | 1 | 1 |
| Glanz (bei 20° und 60°) in rel. Einh. | 45 / 85 | 53 / 85 | 61 / 87 | 69 / 87 |

Während der Füller, bei welchem die Anreibung mit dem erfindungsgemäßen Bindemittel vorgenommen wurde, zum Auflacken aber das konventionelle Alkydharz eingesetzt wurde, in der Härte schlechter als die Vergleichsprobe 4A ist, wird der Glanz bei kleinem Winkel durch den Einsatz des erfindungsgemäßen Bindemittels überraschenderweise ebenfalls verbessert.

### 6.2 Vollständiger Lackaufbau mit Basis- und Klarlack-Schicht

Entsprechend den Angaben in Beispiel 3 wurden die mit der Füllerschicht versehenen Bleche danach zusätzlich mit Basis- und Klarlack beschichtet. Die Ergebnisse der Prüfungen an diesen eingebrannten Beschichtungen sind in der Tabelle 4 (erste Serie) und 5 (zweite Serie) zusammengefaßt.

**Tabelle 4 Prüfergebnisse**

| Füllerlack | 4A | 4B |
|---|---|---|
| Schichtdicke Basis- und Klarlack in µm | 60 | 60 |
| Härte (Persoz) in s | 250 | 245 |
| Steinschlagtest* nach Norm PSA | 1..2 | 1..2 |

| | | |
|---|---|---|
| *: Der Steinschlagtest gemäß der Norm PSA D24 1312 wird durchgeführt, indem in einer der VDA-Norm 508 entsprechenden Prüf-Apparatur innerhalb von 10 Sekunden 500 g kantiger Splitt mit einem mittleren Durchmesser von 4 bis 5 mm und einer Rockwell-Härte von 61 bis 65 mit Druckluft (1000 hPa = 1 bar) auf ein lackiertes Blech mit den Abmessungen 85 × 85 mm² geschossen wird. Das Blech wird anschließend 24 Stunden in auf 40 °C thermostatisiertes entionisiertes Wasser gelegt, und nach einer bis 1,5 Stunden nach dem Herausnehmen aus dem Wasserbad erneut auf gleiche Weise beschossen. Die Bewertung des Steinschlagtests gemäß der genannten Norm wird vorgenommen, indem die Bleche mit Mustern verglichen werden, die unterschiedlich stark geschädigte Lackierung aufweisen. Dabei bedeutet eine höhere Zahl eine stärkere Schädigung. | | |

**Tabelle 5 Prüfergebnisse**

| Füllerlack | 4A | 4B |
|---|---|---|
| Schichtdicke Basis- und Klarlack in µm | 50..55 | 55 |
| Härte (Persoz) in s | 245 | 250 |
| PSA Recycling Methode⁺ | 2..3 | 2..3 |

| | | |
|---|---|---|
| +: Der Steinschlagtest nach der "PSA Recycling Methode" wird so durchgeführt, daß nach dem oben beschriebenen Ablauf eine zweite Wasserlagerung und ein dritter Beschuß vorgenommen wird. Die Bewertung erfolgt wie oben beschrieben. | | |

Bei gleicher Härte und gleichen Eigenschaften bezüglich des Steinschlags lassen sich durch (anteilige) Verwendung des verzweigten Polyesters beim Auflacken höhere Werte für den Festkörper-Massenanteil bzw. niedrigere Mengen an flüchtigen Stoffen bei derselben Festkörper-Masse (vgl. Tabelle 2a, Lacke 4A und 4B) erzielen.

## Patentansprüche

1. Hydroxyfunktionelle Polyester mit einer Hydroxylzahl von 90 mg/g bis 300 mg/g, enthaltend Bausteine abgeleitet von di- oder mehrfunktionellen Säuren **A**, insbesondere Carbonsäuren, aliphatischen tri- oder mehrfunktionellen Alkoholen **B** und aliphatischen Monocarbonsäuren **C** mit mindestens 6 Kohlenstoffatomen, **dadurch gekennzeichnet, daß** die Komponente **A** eine Säurefunktionalität von mindestens 2,1 aufweist und mindestens eine tri- oder mehrfunktionelle Säure oder deren Anhydrid enthält.

2. Hydroxyfunktionelle Polyester nach Anspruch 1, **dadurch gekennzeichnet, daß** die Hydroxylzahl 90 mg/g bis 250 mg/g beträgt.

3. Hydroxyfunktionelle Polyester nach Anspruch 1, **dadurch gekennzeichnet, daß** die aliphatischen Monocarbonsäuren **C** mindestens ein tertiäres Kohlenstoffatom im Alkylrest aufweisen.

4. Verfahren zur Herstellung von hydroxyfunktionellen Polyestern nach Anspruch 1, **dadurch gekennzeichnet, daß** in einem ersten Schritt die Alkohole **B** mit den Monocarbonsäuren **C** in einem Verhältnis umgesetzt werden, daß das Kondensationsprodukt **BC** im Mittel 1,5 bis 3,5 Hydroxylgruppen je Molekül aufweist, und in einem zweiten Schritt diese verzweigten Hydroxylgruppen-haltigen Kondensationsprodukte mit di- oder mehrfunktionellen Säuren **A** umgesetzt werden.

5. Verfahren nach Anspruch 4, **dadurch gekennzeichnet, daß** die Mengen der Säuren **A** und der Kondensationsprodukte **BC** im zweiten Schritt so gewählt werden, daß mindestens 90 % der Säuregruppen von **A** bei der Polykondensation verbraucht werden.

6. Verfahren nach Anspruch 4, **dadurch gekennzeichnet, daß** die mittlere Anzahl von Hydroxylgruppen in den Molekülen **BC** zwischen 1,7 und 3,1 liegt.

7. Festkörperreiche Beschichtungsmittel, enthaltend Polyester nach Anspruch 1.

8. Verwendung von Beschichtungsmitteln nach Anspruch 7 zur Formulierung von Füllerlacken.

9. Pastenharze, enthaltend Beschichtungsmittel nach Anspruch 7.

10. Verwendung von Beschichtungsmitteln nach Anspruch 7 zur Formulierung von Can- und Coilcoating-Lacken.

## Claims

1. A hydroxy-functional polyester having a hydroxyl number of 90 mg/g to 300 mg/g, comprising constituent units derived from difunctional or polyfunctional acids **A,** especially carboxylic acids, aliphatic trifunctional or polyfunctional alcohols **B** and aliphatic monocarboxylic acids **C** having at least 6 carbon atoms, wherein component **A** has an acid functionality of at least 2.1 and comprises at least one trifunctional or polyfunctional acid or its anhydride.

2. The hydroxy-functional polyester as claimed in claim 1, wherein the hydroxyl number is 90 mg/g to 250 mg/g.

3. The hydroxy-functional polyester as claimed in claim 1, wherein the aliphatic monocarboxylic acids **C** have at least one tertiary carbon atom in the alkyl radical.

4. A process for preparing a hydroxy-functional polyester as claimed in claim 1, which comprises in a first step reacting the alcohols **B** with the monocarboxylic acids **C** in a ratio such that the condensation product **BC** has on average 1.5 to 3.5 hydroxyl groups per molecule, and in a second step reacting these branched, hydroxyl-containing condensation products with difunctional or polyfunctional acids **A.**

5. The process as claimed in claim 4, wherein the amounts of the acids **A** and the condensation products **BC** in the second step are selected such that at least 90 % of the acid groups of **A** are consumed in the polycondensation.

6. The process as claimed in claim 4, wherein the average number of hydroxyl groups in the molecules **BC** is between 1.7 and 3.1.

7. A high-solids coating composition comprising a polyester as claimed in claim 1.

8. The use of a coating composition as claimed in claim 7 for formulating surfacer coating materials.

9. A paste resin comprising a coating composition as claimed in claim 7.

10. The use of a coating composition as claimed in claim 7 for formulating can and coil coating materials.

## Revendications

1. Polyesters hydroxyfonctionnels ayant un indice d'hydroxyle de 90 mg/g à 300 mg/g, contenant des éléments dérivés d'acides di- ou poly-fonctionnels A, en particulier d'acides carboxyliques, d'alcools tri- ou poly-fonctionnels aliphatiques B et d'acides monocarboxyliques aliphatiques C contenant au moins 6 atomes de carbone, **caractérisés en ce que** le composant A présente une fonctionnalité acide d'au moins 2,1 et contient au moins un acide tri- ou poly-fonctionnel ou son anhydride.

2. Polyesters hydroxyfonctionnels selon la revendication 1, **caractérisés en ce que** l'indice d'hydroxyle va de 90 mg/g à 250 mg/g.

3. Polyesters hydroxyfonctionnels selon la revendication 1, **caractérisés en ce que** les acides monocarboxyliques aliphatiques C présentent au moins un atome de carbone tertiaire dans le groupe alkyle.

4. Procédé de production de polyesters hydroxyfonctionnels selon la revendication 1, **caractérisé en ce que**, dans une première étape, les alcools B sont mis à réagir avec les acides monocarboxyliques C dans un rapport tel que le produit de condensation BC contienne en moyenne 1,5 à 3,5 groupes hydroxyle par molécule et, dans une deuxième étape, ces produits de condensation ramifiés contenant des groupes hydroxyle sont mis à réagir avec des acides di- ou poly-fonctionnels A.

5. Procédé selon la revendication 4, **caractérisé en ce que**, dans la deuxième étape, les quantités des acides A et des produits de condensation **BC** sont choisies de telle sorte qu'au moins 90% des groupes acide de A soient consommés lors de la polycondensation.

6. Procédé selon la revendication 4, **caractérisé en ce que** le nombre moyen de groupes hydroxyle dans les molécules BC est compris entre 1,7 et 3,1.

7. Agents de revêtement riches en matières solides contenant les polyesters selon la revendication 1.

8. Utilisation d'agents de revêtement selon la revendication 7, pour la formulation de vernis de remplissage.

9. Résines pâteuses contenant des agents de revêtement selon la revendication 7.

10. Utilisation d'agents de revêtement selon la revendication 7, pour la formulation de vernis pour revêtement de boîtes et pour couchage sur bande.
